# EUROPÄISCHE PATENTSCHRIFT

(11) **EP 2 964 713 B1**
(45) Veröffentlichungstag und Bekanntmachung des Hinweises auf die Patenterteilung: **01.05.2019**
(21) Anmeldenummer: 14707328.2
(22) Anmeldetag: 27.02.2014
(51) Int. Cl.: C09D 183/14, C09K 21/14, C09D 183/16

(54) **PULVERFÖRMIGES BESCHICHTETES FLAMMSCHUTZMITTEL**
PULVERULENT COATED FLAME RETARDANT
AGENT IGNIFUGE PULVÉRULENT ENROBÉ

(30) Priorität: 09.03.2013 DE 102013004170
(43) Veröffentlichungstag der Anmeldung: 13.01.2016
(73) Patentinhaber: Clariant International Ltd, 4132 Muttenz (CH)
(72) Erfinder: MARRWITZ, Daniela, 65779 Kelkheim (DE); STORK, Annemarie, 68163 Mannheim (DE)
(74) Vertreter: Jacobi, Carola
(86) Internationale Anmeldenummer: PCT/EP2014/000516
(87) Internationale Veröffentlichungsnummer: WO 2014/139639

(56) Entgegenhaltungen:
- EP-A1- 0 970 985
- EP-A1- 1 674 551
- US-A1- 2007 135 551

## Beschreibung

Die Erfindung betrifft ein pulverförmiges beschichtetes Flammschutzmittel, ein Verfahren zu seiner Herstellung und seine Verwendung.

Bekanntlich werden Ammoniumphosphate, Ammoniumpolyphosphate, Melaminphosphate, Melaminborate und Melamincyanurate als halogenfreie Flammschutzmittel unter anderem für Kunststoffe, Textilien und in intumeszierenden Beschichtungen eingesetzt.

Zwar verleihen diese Flammschutzmittel den Kunststoffen eine gute Flammschutzwirkung, aber aufgrund der vorhandenen Wasserlöslichkeit der Flammschutzmittel findet mit der Zeit eine Migration derselben beispielsweise aus den Kunststoffen durch Luftfeuchte und andere Umwelteinflüsse statt.

Es hat deshalb nicht an Versuchen gefehlt, Flammschutzmittel so auszurüsten, dass sie hydrolyseunempfindlich sind und sich auch resistent gegen andere Einflüsse zeigen, damit ihre Wirksamkeit im entsprechenden Kunststoff nicht nachlässt.

So wird beispielsweise in der DE-A-3316880 ein Verfahren zur Herstellung von hydrolysestabilen, wasserunlöslichen Ammoniumpolyphosphat beschrieben. Hierbei wird Ammoniumpolyphosphat mit Melamin-Formaldehyd- bzw. Phenol-Formaldehyd-Harzen beschichtet.

Der Nachteil dieses Beschichtungsverfahrens, auch Coating-Verfahren genannt, ist die Verwendung des giftigen Formaldehyds an sich, sowie die teilweise Freisetzung des Formaldehyds bei der Herstellung und Verwendung flammgeschützter Kunststoffe, Textilien oder intumeszierenden Beschichtungen.

Bei Verwendung von Melamin-Formaldehyd verkapselten Ammoniumpolyphosphat in der Textilanwendung muss der strengen ÖkoTex-Standard 100 erfüllt werden. Je nach Produktklasse dürfen max. 0,1 ppm Formaldehyd freigesetzt werden. Der MAK-Wert für Formaldehyd selbst beträgt 0,5 ppm. Es wird daher nach Alternativen für Formaldehyd gesucht.

In der JP-A-2006028488 wird ein Ammoniumpolyphosphat beschrieben, dass mit Organosilicon-Harzen oberflächenbehandelt wurde, um die Wasserlöslichkeit des Ammoniumpolyphosphats zu senken. Einsatzgebiet ist hier die Textilbeschichtung in Kraftfahrzeugen.

Weiterhin wird in der EP-A-0970985 ein Verfahren zur Herstellung von oberflächenmodifizierten Flammschutzmitteln beschrieben, bei dem organofunktionelle Silane und oligomere Organosiloxane eingesetzt werden.

Dadurch wird die Wasserlöslichkeit im Vergleich zu unbehandelten Flammschutzmittel um 17 bis maximal 60 % gesenkt.

In der EP-A-1674551 wird pulverförmiges, beschichtetes Ammoniumpolyphosphat als Flammschutzmittel offenbart, das als Coatingmittel aminogruppenhaltige Alkoxysilane enthält.

Daher bestand die Aufgabe, eine weitere Reduzierung der Wasserlöslichkeit von bestimmten Flammschutzmitteln zu erreichen.

Diese Aufgabe wird gelöst, indem Silazane bzw. Gemische aus Silazanen mit Organosiloxanen als Coatingmittel eingesetzt werden.

Überraschenderweise wurde gefunden, dass die Wasserlöslichkeit von Flammschutzmitteln durch Verwendung von Silazanen bzw. Gemischen aus Silazanen mit Organosiloxanen als Coatingmittel deutlich gesenkt werden kann. Außerdem wird hierdurch die Migration der Flammschutzmittel aus Kunstoffen reduziert und die Viskosität des Flammschutzmittels gesenkt.

Die Erfindung betrifft daher ein pulverförmiges beschichtetes Flammschutzmittel, welches dadurch gekennzeichnet ist, dass es sich bei dem Flammschutzmittel um phosphorhaltige und/oder stickstoffhaltige Flammschutzmittel handelt und als Coatingmittel Silazane und/oder Silazan-Organosiloxan-Mischungen gemäß Anspruch 1 eingesetzt werden.

Bevorzugt handelt es sich bei den phosphorhaltigen und/oder stickstoffhaltigen Flammschutzmitteln um Ammoniumorthophosphat, Ammoniumdiphosphat, Ammoniumpolyphosphate, Melaminphosphate, Melaminorthophosphate, Melamindiphosphat, Melaminpolyphosphat, Melaminpyrophosphat, Melaminborat, Melamincyanurat, Melaminborophosphat, Melamin-1.X-phthalat und/oder Melaminoxalat; um Melem, Melam, Melon, Melampolyphosphat, Melempolyphosphat und/oder Melonpolyphosphat.

Bevorzugt handelt es sich bei den phosphorhaltigen und/oder stickstoffhaltigen Flammschutzmitteln um Ammoniumphosphat und/oder Ammoniumpolyphosphat.

Als Silazane werden dimere und/oder polymere Silazane der Formel (1)

-(SiR'R"-NR"')ₙ- (1)

eingesetzt, wobei R', R" und R'" gleich oder verschieden sind und unabhängig voneinander für Wasserstoff oder einen gegebenenfalls substituierten Alkyl,- Aryl-, Vinyl- oder (Trialkoxysilyl)alkyl-Rest stehen, und wobei es sich bei n um eine ganze Zahl handelt und n so bemessen ist, dass das Silazan ein zahlenmittleres Molekulargewicht von 70 bis 150.000 g/mol aufweist, und/oder auch solche der Formel (2)

-(SiR'R"-NR"')ₙ-(SiR*R**-NR***)ₚ- (2)

eingesetzt, wobei R', R", R"', R*, R** und R*** unabhängig voneinander für Wasserstoff oder einen gegebenenfalls subsituierten Alkyl-, Aryl, Vinyl- oder (Trialkoxysilyl)alkyl-Rest stehen und n und p so bemessen sind, dass das Silazan ein zahlenmittleres Molekulargewicht von 150 bis 150.000 g/mol aufweist. Besonders geeignet sind dabei solche Silazane der Formel 1 und/oder 2, in denen R', R", R"', R*, R** und R*** unabhängig voneinander für einen Rest aus der Gruppe Wasserstoff, Methyl, Ethyl, Propyl, iso-Propyl, Butyl, iso-Butyl, tert.-Butyl, Phenyl, Vinyl oder 3-(Triethoxysilyl)propyl, 3-(Trimethoxysilyl)propyl stehen. Bevorzugt stehen im Silazan der Formel (2)
- R', R'" und R*** für Wasserstoff und R", R* und R** für Methyl und/oder Vinyl oder
- R' und R'" für Wasserstoff, R", R* und R** für Methyl und R*** für (Trialkoxysilyl)propyl oder
- R', R"', R* und R*** für Wasserstoff und R" und R** für Methyl.

Bevorzugt handelt es sich bei dem Organosiloxan der Silazan-Organosiloxan-Mischungen um Alkoxysiloxane und/oder oligomere Alkoxysiloxane, die lineare, verzweigte, funktionalisierte und/oder cyclische Alkyl-, Alkoxy-, Aminoalkyl-, Aryl- und/oder Vinyl-Gruppen enthalten.

Bevorzugt handelt es sich bei dem Organosiloxan um 3-Aminopropyltrialkoxysilan, 3-Aminopropyl-methyl-dialkoxysilan, 3-Glycidyloxypropyltrialkoxysilan, 3-Acryloxypropyl-trialkoxysilan, 3-Methacryloxypropyl-trialkoxysilan, Vinyl-trialkoxysilan, Vinyl-tris(2-methoxy-ethoxy)silan, Propyl-trialkoxysilan, Butyltrialkoxysilan, Pentyl-trialkoxysilan, Hexyl-trialkoxysilan, Heptyl-trialkoxysilan, Octyl-trialkoxysilan, Propyl-methyl-dialkoxysilan, Butyl-methyl-dialkoxysilan und/oder Phenyl-trialkoxylsilan, Phenylmethyl-dialkoxylsilan und/oder um oligomere vinylfunktionelle, arylfunktionelle und/oder alkylfunktionelle Alkoxysiloxane.

Die Erfindung umfasst auch ein pulverförmiges beschichtetes Flammschutzmittel welches dadurch gekennzeichnet ist, dass 1 bis 50 Gewichtsteile Silazan oder einer Mischung aus Silazan und Organosiloxan gemäß Anspruch 1 auf 100 Gewichtsteile Flammschutzmittel aufgetragen werden.

Die Erfindung betrifft auch ein Verfahren zur Herstellung eines pulverförmigen beschichteten Flammschutzmittels nach einem oder mehreren der Ansprüche 1 bis 8, dadurch gekennzeichnet, dass die Silazane und/oder Silazan-Organosiloxan-Mischungen direkt oder in Form einer Lösung auf das pulverförmige Flammschutzmittel aufgetragen werden.

Bevorzugt werden die Silazane und/oder Silazan-Organosiloxan-Mischungen durch Sprühen, Eindüsen, Tropfen oder Gießen auf die durch Mischer, Kneter, Rührer oder Gas in Bewegung gehaltenen pulverförmigen Flammschutzmittel aufgetragen.

Bevorzugt wird das erfindungsgemäße Verfahren so ausgeführt, dass das pulverförmigen Flammschutzmittel auf eine Temperatur von 10 bis 200°C vortemperiert ist.

Bevorzugt wird anschließend für 5 min bis 24 h bei Temperaturen von 10 bis 200 °C ausgehärtet.

Bevorzugt ist auch ein Verfahren, bei dem das Flammschutzmittel in einem Lösemittel suspendiert und mit den Silazanen und/oder Silazan-Organosiloxan-Mischungen für 5 min bis 24 h unter Rühren auf 10 bis 200 °C erhitzt wird.

Auch hier wird bevorzugt anschließend für 5 min bis 24 h bei Temperaturen von 10 bis 200 °C ausgehärtet.

Bevorzugt werden die Silazan-Organosiloxan-Mischungen in einem Gewichtsverhältnis von Silazan zu Organosiloxan von 100 : 0 bis 1 : 99 aufgebracht.

Besonders bevorzugt werden die Silazan-Organosiloxan-Mischungen in einem Gewichtsverhältnis von Silazan zu Organosiloxan von 75 : 25 bis 1 : 99 aufgebracht

Schließlich betrifft die Erfindung auch die Verwendung des pulverförmigen beschichteten Flammschutzmittels nach einem oder mehreren der Ansprüche 1 bis 8 in intumeszierenden Beschichtungen, Polyolefinen und anderen Polymeren sowie Textilien.

Im Wesentlichen entsprechen die Polysilazane beispielsweise den folgenden Strukturen:

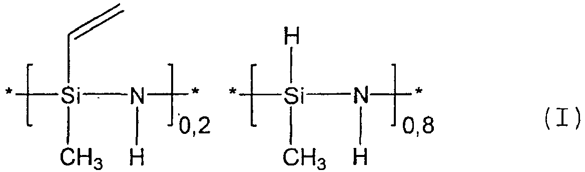

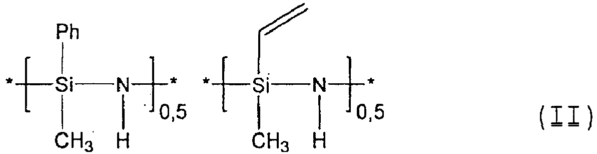

Das erfindungsgemäße Verfahren kann auf verschiedene Arten ausgeführt werden.

So wird in einer Ausführungsform des Verfahrens das Silazan bzw. die Mischung aus Silazan und Organosiloxan auf das pulverförmige Flammschutzmittel aufgetragen. Dabei wird das Pulver in Bewegung gehalten und das Beschichtungsmittel pur oder in Lösung (5 bis 80 Gew.-%) dazugegeben. Die Aufbringung des Silazans bzw. der Mischung aus Silazan und Organosiloxan kann durch Sprühen, Eindüsen, Tropfen oder Gießen erfolgen, während das Flammschutzmittelpulver durch Mischer, Kneter, Rührer oder Gas in Bewegung gehalten wird. Anschließend wird bei erhöhter Temperatur (10 bis 200 °C) für 5 min bis 24 h getrocknet.

Bevorzugt wird das Pulver in bzw. durch folgende Aggregate in Bewegung gehalten:
Pflugscharmischer, Ringspalt- und Ringschichtmischer, Intensiv-Mischer, Doppelwellen-Paddelmischer, Freifallmischer, Kegelschneckenmischer, Planeten-Mischmaschine, Doppelkonusmischer, Fließbettmischer, Luftstrahlmischer, Sprühmischer, Sprühturm, Taumel- bzw. Container-Mischer, Fluidmischer und Kühlmischer.

Selbstverständlich sind auch hier nicht aufgeführte Aggregate geeignet.

In einer weiteren Ausführungsform des Verfahrens wird das Flammschutzmittel in einem Lösemittel suspendiert und mit dem Silazan oder einer Mischung aus Silazan und Organosiloxan für 5 min bis 24 h unter Rühren auf 10 bis 200 °C, bevorzugt auf 50 bis 180 °C erhitzt. Nach Filtrieren und Waschen wird bei 10 bis 200 °C für 5 min bis 24 h getrocknet.

Bevorzugt werden 1 bis 30 Gewichtsteile Silazan oder einer Mischung aus Silazan und Organosiloxan auf 100 Gewichtsteile Flammschutzmittel aufgetragen.

Als geeignete Organosiloxane können beispielsweise Dynasylan® AMEO, Dynasylan® PTEO, Dynasylan® OCTEO, Dynasylan® MTMS, Dynasylan® 6498, Dynasylan® 6490 und Protectosil® 166 eingesetzt werden.

Als Lösemittel für das Coating auf Silazanbasis eigenen sich besonders organische Lösemittel. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen dieser Lösemittel. Bei der Verwendung von Silazan-Organosiloxan-Mischungen werden zusätzlich organische Alkohole wie Ethanol, Isopropanol und Methanol sowie Wasser als Lösemittel eingesetzt.

Bevorzugt werden pulverförmige Flammschutzmittel mit einer durchschnittlichen Korngröße von 1 bis 100 µm eingesetzt.

Als Silazane werden dimere und polymere Silazane der Formel 1 bzw. der Formel (2) verwendet, die als Antigraffiti-Mittel und in schmutzabweisenden Beschichtungen eingesetzt werden.

Beispiele für die verwendeten Silazane sind KiON® HTA 1500, KiON® HTT 1800, KiON® ML 33, KiON® ML 100, KiON® VL 100, Ceraset® PSZ 20, Ceraset® PSZ MS.

Die erfindungsgemäßen pulverförmigen beschichteten Flammschutzmittel nach einem oder mehreren der Ansprüche 1 bis 8 werden bevorzugt in intumeszierenden Beschichtungen eingesetzt. Intumeszierende Beschichtungen, auch dämmschichtbildende Brandschutzbeschichtungen genannt, zeichnen sich dadurch aus, dass sie im Brandfall unter entsprechender Temperatureinwirkung aufschäumen und durch dieses Aufschäumen dieser Brandschutzbeschichtung der Wärmedurchtritt auf Stahlkonstruktionen, Decken, Wände, Kabel, Rohre und dergleichen verhindert oder zumindest behindert wird. Die Schaumschichtdickte beträgt dabei mehrere Zentimeter und verhindert eine gewisse Zeitspanne eine direkte Wirkung des Feuers auf die unter der Schaumschicht befindliche Materialen und Konstruktionen.

Bevorzugte dämmschichtbildende Brandschutzbeschichtungen werden auf Basis von im Brandfall schaumbildende und kohlenstoffbildenden Substanzen, filmbildenden Bindemitteln, Treibmitteln und üblichen Hilfs- und Zusatzstoffen hergestellt.

Als filmbildende Bindemittel können beispielsweise Homopolymerisate auf Basis Vinylacetat, Copolymerisate auf Basis Vinylacetat, Ethylen und Vinylchlorid; auf Basis Vinylacetat und dem Vinylester einer Carbonsäure; auf Basis Vinylacetat und Maleinsäure-di-n-Butylester oder Acrylsäureester; auf Basis Styrol und Acrylsäureester und/oder Copolymerisate auf Basis Acrylsäureester, Vinyltoluol/Acrylat-Copolymer, Styrol/Acrylat-Copolymer, Vinyl/Acrylat-Copolymer, selbstvernetzende Polyurethan-Dispersionen eingesetzt werden.

Besonders geeignete schaumbildende Substanzen sind Ammoniumsalze von Phosphorsäuren und/oder Polyphosphorsäuren. Diese können verkapselt oder unverkapselt sein.

Kohlenhydrate, bevorzugt Pentaerythrit, Dipentaerythrit, Tripentaerythrit und/oder Polykondensate des Pentaerythrits werden als kohlenstoffbildende Substanzen eingesetzt.

Als Treibmittel sind Melamin und/oder Guanidin sowie deren Salze und/oder Dicyandiamide, bevorzugt Melaminphoshat, Melamincyanurat, Melaminborat, Melaminsilikat und/oder Guanidinphosphat geeignet.

Weiterhin kann die dämmschichtbildende Brandschutzbeschichtung Melaminpolyphosphat, Dialkylphosphinsäuresalze und andere Phosphorverbindungen enthalten sowie als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen und andere.

Die vorgenannten Brandschutzbeschichtungen (Intumeszenzbeschichtungen) gelangen überwiegend in Form eines streich-, spritz- oder rollfähigen Anstrichmittels zum Schutz von unterschiedlichsten Untergründen, vorzugsweise von Stahl, Holz, Elektrokabeln und Rohren, zum Einsatz.

Die erfindungsgemäßen pulverförmigen beschichteten Flammschutzmittel nach einem oder mehreren der Ansprüche 1 bis 18 werden bevorzugt auch in Polyolefinen eingesetzt.

Bevorzugte Polyolefine sind beispielsweise Polymere von Mono- und Diolefinen (z. B. Ethylen, Propylen, iso-Butylen, Buten, 4-Methylpenten, Isopren, Butadien, Styrol), wie z. B. Polypropylen, Polyisobutylen, Polybut-1-en, Poly-4-methylpent-1-en, Polystyrol, Poly-(p-methylstyrol) und/oder Poly-(alpha-methylstyrol), Polyisopren oder Polybutadien, und Polyethylen (ggf. vernetzt), wie z. B. Polyethylen mit hoher Dichte (HDPE), Polyethylen mit hoher Dichte und hohem Molekulargewicht (HDPE-HMW), Polyethylen mit hoher Dichte und ultrahohem Molekulargewicht (HDPE-UHMW), Polyethylen mit mittlerer Dichte (HMDPE), Polyethylen mit niedriger Dichte (LDPE), linearem Polyethylen mit niedriger Dichte (LLDPE), Polyethylen mit sehr niedriger Dichte (VLDPE), verzweigtes Polyethylen mit niedriger Dichte (BLDPE), auch Polymere von Cycloolefinen, wie z. B. von Cyclopenten oder Norbornen.

Die vorgenannten Polyolefine, insbesondere Polyethylene und Polypropylene, werden bevorzugt nach Stand der Technik beispielsweise durch Radikalpolymerisation (normalerweise bei hohem Druck und hohen Temperaturen) oder katalytischer Polymerisation durch Übergangsmetallkatalysatoren hergestellt.

Bevorzugte Polymere sind zudem Gemische (Blends) der oben aufgeführten Polyolefine, wie z. B. Polypropylen mit Polyisobutylen, Polyethylen mit Polyisobutylen, Polypropylen mit Polyethylen (z. B. PP/HDPE/LDPE) und Gemische verschiedener Polyethylentypen (z. B. LDPE/HDPE).

Bevorzugte Polymere sind zudem Copolymere von Mono- und Diolefinen miteinander und von Mono- und Diolefinen mit anderen vinylischen Monomeren, wie z. B. Ethylen-Propylen-Copolymere; LLDPE, VLDPE und Gemische hiervon mit LDPE; Propylen-But-1-en-Copolymere,Propylen-iso-Butylen-Copolymere, Ethylen-But-1-en-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, iso-Butylen-Isopren-Copolymere, Ethylen-Alkylacrylat-Copolymere, Ethylen-Alkylmethacrylat-Copolymere, EthylenVinylacetat-Copolymere, Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol, auch Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind; auch deren Copolymere mit Kohlenmonoxid oder Ethylen-Acrylsäure-Copolymere und deren Salze (lonomere) und auch Terpolymere von Ethylen mit Propylen und einem Dien wie z. B. Hexadien, Dicyclopentadien oder Ethylidennorbornen; und Gemische solcher Copolymere miteinander und/oder andere Polymere, z. B. Polypropylen-Ethylene-Propylen-Copolymer, LDPE-Ethylen-Vinylacetat-Copolymer, LDPE-Ethylen-Acrylsäure-Copolymer, LLDPE-Ethylen-Vinylacetat-Copolymer, LLDPE-Ethylen-Acrylsäure-Copolymer, und alternierende oder statistische Polyalkylen-Kohlenmonoxid-Copolymere und Gemische hiervon mit anderen Polymeren, wie beispielsweise Polyamiden.

Die erfindungsgemäßen pulverförmigen beschichteten Flammschutzmittel nach einem oder mehreren der Ansprüche 1 bis 8 können aber auch in einem weiten Bereich von Polymeren eingesetzt werden. Hierzu gehören hauptsächlich thermoplastische Polymere wie Polyester, Polystyrol oder Polyamid und duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex® 2500, Celanex® 2002, Fa Celanese; Ultradur®, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Die erfindungsgemäßen pulverförmigen beschichteten Flammschutzmittel nach einem oder mehreren der Ansprüche 1 bis 8 können weiterhin entsprechend in bzw. auf Textilien eingesetzt werden, ohne deren Eigenschaften zu beeinträchtigen.

Die erfindungsgemäßen Flammschutzmittel können auf flexiblen, insbesondere textilen Materialien in statistischer Verteilung oder in einem bestimmten Muster, z. B. punktförmig aufgebracht werden. Solche Textilien werden etwa in der Raumausstattung von Hotels, Theatern und Kongresszentren sowie in Verkehrsmitteln (Bus, Zug, Auto, Flugzeug etc.) verwendet.

Die erfindungsgemäßen Flammschutzmittel können zusammen mit anderen Flammschutzmitteln eingesetzt werden wie sie etwa in Römpps Chemie-Lexikon, 10. Aufl., (1996) unter dem Stichwort "Flammschutzmittel" und an anderen Stellen beschrieben sind.

Insgesamt können die erfindungsgemäßen Flammschutzmittel allein oder in Wirkung mit anderen Substanzen verkohlungsfördernd, feuererstickend, sperrschichtbildend, dämmschichtbildend und anders wirken.

Für alle vorgenannten Anwendungen in Polymeren, insbesondere Olefinen sowie in oder für dämmschichtbildende Intumeszensbeschichtungen und Textilien können den Flammschutzsystemen bzw. Materialien weitere Additive zugesetzt werden, insbesondere Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Die Erfindung wird durch die nachstehenden Beispiele erläutert.

### Bestimmung der Wasserlöslichkeit

Zur Bestimmung der Wasserlöslichkeit wurde eine 10 Gew.-%ige Suspension des Flammschutzmittels in Wasser bei 25 °C hergestellt, gerührt und filtriert. Der Trockenrückstand des Filtrats bezogen auf die Einsatzmenge entspricht der Wasserlöslichkeit dieses Flammschutzmittels.

### Bestimmung der Viskosität

Zur Bestimmung der Viskosität wurde eine 10 Gew.-%ige Suspension des Flammschutzmittels in Wasser bei 25 °C hergestellt und gerührt. Die Viskosität wurde mittels Brookfield-Viskosimeter bestimmt.

### Eingesetzte

KiON®-HTA1500 AZ Electronics Materials,
KiON® ML33 AZ Electronics Materials
Dynasylan® OCTEO Evonik

### Beispiel 1

100 g Ammoniumpolyphosphat wurden in einem Mischer unter Bewegung mit 10 g KiON-HTA1500-Butylacetatlösung besprüht und für 30 min weiter gemischt. Anschließend wurde bei 130 °C für 20 min getrocknet. Die Werte für die Wasserlöslichkeit sind in Tabelle 1 aufgeführt.

### Beispiel 2

100 g Ammoniumpolyphosphat wurden in einem Mischer unter Bewegung mit 20 g KiON-HTA1500-Hexanlösung besprüht und für 30 min weiter gemischt. Anschließend wurde bei 180 °C für 20 min getrocknet. Die Werte für die Wasserlöslichkeit sind in Tabelle 1 aufgeführt.

### Beispiel 3

300 g Ammoniumpolyphosphat wurden in einem Mischer unter Bewegung mit 30 g KiON ML33-Butylacetatlösung besprüht und für 30 min weiter gemischt. Anschließend wurde bei 180 °C für 30 min getrocknet. Die Werte für die Wasserlöslichkeit und Viskosität sind in Tabelle 1 aufgeführt.

### Beispiel 4 Vergleich

100 g Ammoniumpolyphosphat wurden in einem Mischer unter Bewegung mit 20 g Dynasylan OCTEO-Ethanollösung besprüht und für 30 min weiter gemischt. Anschließend wurde bei 180 °C für 20 min getrocknet. Die Werte für die Wasserlöslichkeit und Viskosität sind in Tabelle 1 aufgeführt.

### Beispiel 5

Es wurde Analog Beispiel 4 verfahren, wobei jedoch 20 g einer 1:1 Mischung Dynasylan OCTEO-KiON ML33-Ethanollösung eingesetzt wurde. Die Werte für die Wasserlöslichkeit und Viskosität sind in Tabelle 1 aufgeführt.

**Tabelle 1**

| Wasserlöslichkeit (10 Gew.-%ige Suspension, 25 °C) und Viskosität (10 Gew.-%ige Suspension, 25 °C) | | |
|---|---|---|
| Flammschutzmittel | Wasserlöslichkeit [%] | Viskosität [mPa*s] |
| Ammoniumpolyphosphat unbehandelt | 0,40 | 43 |
| Beispiel 1 | 0,09 | n.b.* |
| Beispiel 2 | 0,05 | n.b.* |
| Beispiel 3 | 0,20 | 22 |
| Beispiel 4 (Vergleich) | 0,26 | 37 |
| Beispiel 5 | 0,13 | 25 |

| | | |
|---|---|---|
| n.b.*: nicht bestimmt | | |

Wie Tabelle 1 zeigt, kann die Wasserlöslichkeit der erfindungsgemäßen Flammschutzmittel gegenüber dem Vergleichsbeispiel stark reduziert werden.

Durch die Beimischung von Silazan zu einer Beschichtung mit Organosiloxanen kann die Wasserlöslichkeit im Vergleich zur Beschichtung mit reinen Siloxanen stark reduziert werden.

Die Viskosität des Flammschutzmittels wird durch Beschichtung mit Silazanen bzw. mit Silazan-Organosiloxan-Mischung reduziert. Dies erleichtert die Herstellung von Intumeszenzfarben, da hierdurch beispielsweise die Viskosität dieser wenig beeinflusst wird.

Des Weiteren wurde der Gewichtsverlust bei Wasserlagerung gemessen. Dabei wurde ein Prüfkörper aus flammgeschützten Polypropylen mittels Extrusion hergestellt. Dieser wurde gewogen und in einem auf 25 °C temperiertem, gerührtem Bad in Wasser gelagert. Nach 30 Tagen wurden die Prüfkörper zunächst 48 Stunden bei 80 °C getrocknet und anschließend erneut gewogen. Der Masseverlust wurde gemessen

**Tabelle 2: Gewichtsverlust bei Wasserlagerung**

| Flammschutzmittel | Gewichtsverlust bei Wasserlagerung [%] |
|---|---|
| Ammoniumpolyphosphat unbehandelt | 1,5 |
| Beispiel 2 | 0,2 |
| Beispiel 4 | 0,8 |
| Beispiel 5 | 0,4 |

Durch die geringere Wasserlöslichkeit eignen sich die erfindungsgemäßen beschichteten Flammschutzmittel zur Verwendung in Polyolefinen wie beispielsweise Polyethylen, Polypropylen, Polyester etc. und Textilanwendungen. Beispielsweise wird durch Einsatz von beschichteten Ammoniumpolyphosphat in Polypropylen die Migration im Vergleich zu unbehandelten Ammoniumpolyphosphat reduziert werden.

Durch die vorgenannte geringere Wasserlöslichkeit eignen sich die erfindungsgemäßen beschichteten Flammschutzmittel insbesondere auch zur Verwendung in Intumeszenzbeschichtungen, vor allen Dingen im Außenbereich und an Orten, wo hohe Witterungsbeständigkeit gefordert ist.

## Patentansprüche

1. Pulverförmiges beschichtetes Flammschutzmittel, **dadurch gekennzeichnet, dass** es sich bei dem Flammschutzmittel um phosphorhaltige und/oder stickstoffhaltige Flammschutzmittel handelt und als Coatingmittel Silazane und/oder Silazan-Organosiloxan-Mischungen eingesetzt werden, wobei es sich bei den Silazanen um dimere und/oder polymere Silazane der Formel (1)
-(SiR'R"-NR'")ₙ- (1)
handelt,
wobei R', R" und R'" gleich oder verschieden sind und unabhängig voneinander für Wasserstoff oder einen gegebenenfalls substituierten Alkyl,- Aryl-, Vinyl- oder (Trialkoxysilyl)alkyl-Rest stehen, wobei es sich bei n um eine ganze Zahl handelt und n so bemessen ist, dass das Silazan ein zahlenmittleres Molekulargewicht von 70 bis 150000 g/mol aufweist; und/oder es sich bei den Silazanen um solche der Formel (2)
-(SiR'R"-NR'")ₙ-(SiR*R**-NR***)ₚ- (2)
handelt,
wobei R', R", R"', R*, R** und R*** unabhängig voneinander für Wasserstoff oder einen gegebenenfalls subsituierten Alkyl-, Aryl, Vinyl- oder (Trialkoxysilyl)alkylRest stehen und n und p so bemessen sind, dass das Silazan ein zahlenmittleres Molekulargewicht von 150 bis 150.000 g/mol aufweist.

2. Pulverförmiges beschichtetes Flammschutzmittel nach Anspruch 1, **dadurch gekennzeichnet, dass** es sich bei den phosphorhaltigen und/oder stickstoffhaltigen Flammschutzmitteln um Ammoniumorthophosphat, Ammoniumdiphosphat, Ammoniumpolyphosphat, Melaminphosphat, Melaminorthophosphat, Melamindiphosphat, Melaminpolyphosphat, Melaminpyrophosphat, Melaminborat, Melamincyanurat, Melaminborophosphat, Melamin-1.X-phthalat und/oder Melaminoxalat; um Melem, Melam, Melon, Melampolyphosphat, Melempolyphosphat und/oder Melonpolyphosphat handelt.

3. Pulverförmiges beschichtetes Flammschutzmittel nach Anspruch 1 oder 2, **dadurch gekennzeichnet, dass** es sich bei den phosphorhaltigen und/oder stickstoffhaltigen Flammschutzmitteln um Ammoniumdiphosphat und/oder Ammoniumpolyphosphat handelt.

4. Pulverförmiges beschichtetes Flammschutzmittel nach einem oder mehreren der Ansprüche 1 bis 3, **dadurch gekennzeichnet, dass** im Silazan der Formel (1) und/oder Formel (2) R', R", R"', R*, R** und R*** unabhängig voneinander für einen Rest aus der Gruppe Wasserstoff, Methyl, Ethyl, Propyl, iso-Propyl, Butyl, iso-Butyl, tert-Butyl, Phenyl, Vinyl oder 3-(Triethoxysilyl)propyl, 3-(Trimethoxysilyl)propyl stehen.

5. Pulverförmiges beschichtetes Flammschutzmittel nach Anspruch 4, **dadurch gekennzeichnet, dass** im Silizan der Formel (2)
- R', R'" und R*** für Wasserstoff und R", R* und R** für Methyl und/oder Vinyl stehen oder
- R' und R'" für Wasserstoff, R", R* und R** für Methyl und R*** für (Trialkoxysilyl)propyl oder
- R', R'", R* und R*** für Wasserstoff und R" und R** für Methyl stehen.

6. Pulverförmiges beschichtetes Flammschutzmittel nach Anspruch 1, **dadurch gekennzeichnet, dass** es sich bei dem Organosiloxan der Silazan-Organosiloxan-Mischungen um Alkoxysiloxane und/oder oligomere Alkoxysiloxane handelt, die lineare, verzweigte, funktionalisierte und/oder cyclische Alkyl-, Alkoxy-, Aminoalkyl-, Aryl- und/oder Vinyl-Gruppen enthalten.

7. Pulverförmiges beschichtetes Flammschutzmittel nach Anspruch 1, **dadurch gekennzeichnet, dass** es sich bei dem Organosiloxan um 3-Aminopropyltrialkoxysilan, 3-Aminopropyl-methyl-dialkoxysilan, 3-Glycidyloxypropyltrialkoxysilan, 3-Acryloxypropyl-trialkoxysilan, 3-Methacryloxypropyl-trialkoxysilan, Vinyl-trialkoxysilan, Vinyl-tris(2-methoxy-ethoxy)silan, Propyl-trialkoxysilan, Butyltrialkoxysilan, Pentyl-trialkoxysilan, Hexyl-trialkoxysilan, Heptyl-trialkoxysilan, Octyl-trialkoxysilan, Propyl-methyl-dialkoxysilan, Butyl-methyl-dialkoxysilan und/oder Phenyl-trialkoxylsilan, Phenylmethyl-dialkoxylsilan und/oder um oligomere vinylfunktionelle, arylfunktionelle und/oder alkylfunktionelle Alkoxysiloxane handelt.

8. Pulverförmiges beschichtetes Flammschutzmittel nach einem oder mehreren der Ansprüche 1 bis 7 **dadurch gekennzeichnet, dass** 1 bis 50 Gewichtsteile Silazan oder einer Mischung aus Silazan und Organosiloxan auf 100 Gewichtsteile Flammschutzmittel aufgetragen werden.

9. Verfahren zur Herstellung eines pulverförmigen beschichteten Flammschutzmittels nach einem oder mehreren der Ansprüche 1 bis 8, **dadurch gekennzeichnet, dass** die Silazane und/oder Silazan-Organosiloxan-Mischungen direkt oder in Form einer Lösung auf das pulverförmige Flammschutzmittel aufgetragen werden.

10. Verfahren nach Anspruch 9, **dadurch gekennzeichnet, dass** die Silazane und/oder Silazan-Organosiloxan-Mischungen durch Sprühen, Eindüsen, Tropfen oder Gießen auf die durch Mischer, Kneter, Rührer oder Gas in Bewegung gehaltenen pulverförmigen Flammschutzmittel aufgetragen werden.

11. Verfahren nach Anspruch 8 oder 9, **dadurch gekennzeichnet, dass** das pulverförmigen Flammschutzmittel auf eine Temperatur von 10 bis 200 °C vortemperiert ist.

12. Verfahren nach Anspruch 11, **dadurch gekennzeichnet, dass** anschließend für 5 min bis 24 h bei Temperaturen von 10 bis 200 °C ausgehärtet wird.

13. Verfahren zur Herstellung eines pulverförmigen beschichteten Flammschutzmittels nach einem oder mehreren der Ansprüche 1 bis 8, **dadurch gekennzeichnet, dass** das Flammschutzmittel in einem Lösemittel suspendiert und mit den Silazanen und/oder Silazan-Organosiloxan-Mischungen für 5 min bis 24 h unter Rühren auf 10 bis 200 °C erhitzt wird.

14. Verfahren nach Anspruch 13, **dadurch gekennzeichnet, dass** anschließend für 5 min bis 24 h bei Temperaturen von 10 bis 200 °C ausgehärtet wird.

15. Verfahren nach einem oder mehreren der Ansprüche 9 bis 14, **dadurch gekennzeichnet, dass** das Gewichtsverhältnis von Silazan zu Organosiloxan 100 : 0 bis 1 : 99 beträgt.

16. Verfahren nach einem oder mehreren der Ansprüche 9 bis 15, **dadurch gekennzeichnet, dass** das Gewichtsverhältnis von Silazan zu Organosiloxan 75 : 25 bis 1 : 99 beträgt.

17. Verwendung des pulverförmigen beschichteten Flammschutzmittels nach einem oder mehreren der Ansprüche 1 bis 8 in intumeszierenden Beschichtungen, Polyolefinen und anderen Polymeren sowie Textilien.

## Claims

1. A pulverulent coated flame retardant which is a phosphorus-containing and/or nitrogen-containing flame retardant where silazanes and/or silazane-organosiloxane mixtures are used as coating material, where the silazanes are dimeric and/or polymeric silazanes of the formula (1)
-(SiR'R"-NR"')ₙ- (1)
where R', R", and R'" are identical or different and are mutually independently hydrogen or an optionally substituted alkyl, aryl, vinyl, or (trialkoxysilyl)alkyl moiety, where n is an integer and n is such that the number-average molar mass of the silazane is from 70 to 150 000 g/mol; are/or where the silazanes are those of the formula (2)
-(SiR'R"-NR'")ₙ-(SiR*R**-NR***)ₚ- (2)
where R', R", R"', R*, R**, and R*** mutually independently are hydrogen or an optionally substituted alkyl, aryl, vinyl, or (trialkoxysilyl)alkyl moiety, and n and p are such that the number-average molar mass of the silazane is from 150 to 150 000 g/mol.

2. The pulverulent coated flame retardant as claimed in claim 1, wherein the phosphorus-containing and/or nitrogen-containing flame retardant is ammonium orthophosphate, ammonium diphosphate, ammonium polyphosphate, melamine phosphate, melamine orthophosphate, melamine diphosphate, melamine polyphosphate, melamine pyrophosphate, melamine borate, melamine cyanurate, melamine borophosphate, melamine 1,X-phthalate, and/or melamine oxalate; melem, melam, melon, melam polyphosphate, melem polyphosphate and/or melon polyphosphate.

3. The pulverulent coated flame retardant as claimed in claim 1 or 2, wherein the phosphorus-containing and/or nitrogen-containing flame retardant is ammonium diphosphate and/or ammonium polyphosphate.

4. The pulverulent coated flame retardant as claimed in one or more of claims 1 to 3, wherein R', R", R"', R*, R**, and R*** in the silazane of the formula (1) and/or formula (2) are mutually independently a moiety from the group of hydrogen, methyl, ethyl, propyl, isopropyl, butyl, isobutyl, tert-butyl, phenyl, vinyl, or 3-(triethoxysilyl)propyl, 3-(trimethoxysilyl)propyl.

5. The pulverulent coated flame retardant as claimed in claim 4, wherein, in the silazane of the formula (2),
- R', R'", and R*** are hydrogen and R", R*, and R** are methyl and/or vinyl, or
- R' and R'" are hydrogen, R", R*, and R** are methyl and R*** is (trialkoxysilyl)propyl, or
- R', R'", R*, and R*** are hydrogen, and R" and R** are methyl.

6. The pulverulent coated flame retardant as claimed in claim 1, wherein the organosiloxane of the silazane-organosiloxane mixtures is alkoxysiloxane and/or oligomeric alkoxysiloxane comprising linear, branched, functionalized, and/or cyclic alkyl, alkoxy, aminoalkyl, aryl and/or vinyl groups.

7. The pulverulent coated flame retardant as claimed in claim 1, wherein the organosiloxane is 3-aminopropyltrialkoxysilane, 3-aminopropylmethyldialkoxysilane, 3-glycidyloxypropyltrialkoxysilane, 3-acryloxypropyltrialkoxysilane, 3-methacryloxypropyltrialkoxysilane, vinyltrialkoxysilane, vinyl-tris(2-methoxy-ethoxy)silane, propyltrialkoxysilane, butyltrialkoxysilane, pentyltrialkoxysilane, hexyltrialkoxysilane, heptyltrialkoxysilane, octyltrialkoxysilane, propylmethyl-dialkoxysilane, butylmethyldialkoxysilane, and/or phenyltrialkoxysilane, phenylmethyldialkoxysilane, and/or is an oligomeric vinyl-functional, aryl-functional, and/or alkyl-functional alkoxysiloxane.

8. The pulverulent coated flame retardant as claimed in one or more of claims 1 to 7, wherein from 1 to 50 parts by weight of silazane or of a mixture of silazane and organosiloxane are applied to 100 parts by weight of flame retardant.

9. A process for the production of a pulverulent coated flame retardant as claimed in one or more of claims 1 to 8, which comprises applying the silazanes and/or silazane-organosiloxane mixtures directly or in the form of a solution to the pulverulent flame retardant.

10. The process as claimed in claim 9, wherein the silazanes and/or silazane-organosiloxane mixtures are applied by spraying or injection, or in droplet form, or by pouring onto the pulverulent flame retardants kept in motion via mixers, kneaders, stirrers, or gas.

11. The process as claimed in claim 8 or 9, wherein the temperature of the pulverulent flame retardant has been controlled in advance to from 10 to 200°C.

12. The process as claimed in claim 11, wherein hardening is then carried out for from 5 min to 24 h at temperatures of from 10 to 200°C.

13. A process for the production of a pulverulent coated flame retardant as claimed in one or more of claims 1 to 8, which comprises suspending the flame retardant in a solvent and heating with the silazanes and/or silazane-organosiloxane mixtures to from 10 to 200°C for from 5 min to 24 h, with stirring.

14. The process as claimed in claim 13, wherein hardening is then carried out for from 5 min to 24 h at temperatures of from 10 to 200°C.

15. The process as claimed in one or more of claims 9 to 14, wherein the ratio by weight of silazane to organosiloxane is from 100:0 to 1:99.

16. The process as claimed in one or more of claims 9 to 15, wherein the ratio by weight of silazane to organosiloxane is from 75:25 to 1:99.

17. The use of the pulverulent coated flame retardant as claimed in one or more of claims 1 to 8 in intumescent coatings, polyolefins and other polymers, and also textiles.

## Revendications

1. Agent ignifuge revêtu en poudre, **caractérisé en ce que** l'agent ignifuge consiste en un agent ignifuge contenant du phosphore et/ou contenant de l'azote, et des silazanes et/ou des mélanges de silazanes-organosiloxanes sont utilisés en tant qu'agents de revêtement, les silazanes consistant en des silazanes dimères et/ou polymères de formule (1)
-(SiR'R"-NR"')ₙ- (1)
dans laquelle R', R" et R"' sont identiques ou différents, et représentent indépendamment les uns des autres l'hydrogène ou un radical alkyle, aryle, vinyle ou (trialcoxysilyl)alkyle éventuellement substitué, n est un nombre entier et n est déterminé de telle sorte que le silazane présente un poids moléculaire moyen en nombre de 70 à 150 000 g/mol ; et/ou les silazanes consistant en des silazanes de formule (2)
-(SiR'R"-NR"')ₙ-(SiR*R**-NR***)ₚ- (2)
dans laquelle R', R", R"', R*, R** et R*** représentent indépendamment les uns des autres l'hydrogène ou un radical alkyle, aryle, vinyle ou (trialcoxysilyl)alkyle éventuellement substitué, et n et p sont déterminés de telle sorte que le silazane présente un poids moléculaire moyen en nombre de 150 à 150 000 g/mol.

2. Agent ignifuge revêtu en poudre selon la revendication 1, **caractérisé en ce que** l'agent ignifuge contenant du phosphore et/ou contenant de l'azote est l'orthophosphate d'ammonium, le diphosphate d'ammonium, le polyphosphate d'ammonium, le phosphate de mélamine, l'orthophosphate de mélamine, le diphosphate de mélamine, le polyphosphate de mélamine, le pyrophosphate de mélamine, le borate de mélamine, le cyanurate de mélamine, le borophosphate de mélamine, le 1.X-phtalate de mélamine et/ou l'oxalate de mélamine ; le mélem, le mélam, le mélon, le polyphosphate de mélam, le polyphosphate de mélem et/ou le polyphosphate de mélon.

3. Agent ignifuge revêtu en poudre selon la revendication 1 ou 2, **caractérisé en ce que** l'agent ignifuge contenant du phosphore et/ou contenant de l'azote est le diphosphate d'ammonium et/ou le polyphosphate d'ammonium.

4. Agent ignifuge revêtu en poudre selon une ou plusieurs des revendications 1 à 3, **caractérisé en ce que**, dans le silazane de formule (1) et/ou de formule (2), R', R'', R''', R*, R** et R*** représentent indépendamment les uns des autres un radical du groupe constitué par hydrogène, méthyle, éthyle, propyle, iso-propyle, butyle, iso-butyle, tert-butyle, phényle, vinyle ou 3-(triéthoxysilyl)propyle, 3-(triméthoxysilyl)propyle.

5. Agent ignifuge revêtu en poudre selon la revendication 4, **caractérisé en ce que**, dans le silazane de formule (2),
- R', R''' et R*** représentent hydrogène, et R'', R* et R** représentent méthyle et/ou vinyle, ou
- R' et R'" ' représentent hydrogène, R'', R* et R** représentent méthyle, et R*** représente (trialcoxysilyl)propyle, ou
- R', R''', R* et R*** représentent hydrogène, et R'' et R** représentent méthyle.

6. Agent ignifuge revêtu en poudre selon la revendication 1, **caractérisé en ce que** l'organosiloxane des mélanges de silazanes-organosiloxanes consiste en des alcoxysiloxanes et/ou des alcoxysiloxanes oligomères, qui contiennent des groupes alkyle, alcoxy, aminoalkyle, aryle et/ou vinyle linéaires, ramifiés, fonctionnalisés et/ou cycliques.

7. Agent ignifuge revêtu en poudre selon la revendication 1, **caractérisé en ce que** l'organosiloxane consiste en le 3-aminopropyl-trialcoxysilane, le 3-aminopropyl-méthyl-dialcoxysilane, le 3-glycidyloxypropyl-trialcoxysilane, le 3-acryloxypropyl-trialcoxysilane, le 3-méthacryloxypropyl-trialcoxysilane, le vinyl-trialcoxysilane, le vinyl-tris(2-méthoxy-éthoxy)silane, le propyl-trialcoxysilane, le butyl-trialcoxysilane, le pentyl-trialcoxysilane, l'hexyl-trialcoxysilane, l'heptyl-trialcoxysilane, l'octyl-trialcoxysilane, le propyl-méthyl-dialcoxysilane, le butyl-méthyl-dialcoxysilane et/ou le phényl-trialcoxysilane, le phénylméthyl-dialcoxysilane, et/ou en des alcoxysiloxanes oligomères à fonction vinyle, à fonction aryle et/ou à fonction alkyle.

8. Agent ignifuge revêtu en poudre selon une ou plusieurs des revendications 1 à 7, **caractérisé en ce que** 1 à 50 parties en poids de silazane ou d'un mélange de silazane et d'organosiloxane sont appliquées pour 100 parties en poids d'agent ignifuge.

9. Procédé de fabrication d'un agent ignifuge revêtu en poudre selon une ou plusieurs des revendications 1 à 8, **caractérisé en ce que** les silazanes et/ou les mélanges de silazanes-organosiloxanes sont appliqués directement ou sous la forme d'une solution sur l'agent ignifuge en poudre.

10. Procédé selon la revendication 9, **caractérisé en ce que** les silazanes et/ou les mélanges de silazanes-organosiloxanes sont appliqués par pulvérisation, injection, goutte à goutte ou coulée sur l'agent ignifuge en poudre maintenu en mouvement par un mélangeur, un malaxeur, un agitateur ou un gaz.

11. Procédé selon la revendication 8 ou 9, **caractérisé en ce que** l'agent ignifuge en poudre est préconditionné à une température de 10 à 200 °C.

12. Procédé selon la revendication 11, **caractérisé en ce qu'**il est ensuite durci pendant 5 minutes à 24 h à des températures de 10 à 200 °C.

13. Procédé de fabrication d'un agent ignifuge revêtu en poudre selon une ou plusieurs des revendications 1 à 8, **caractérisé en ce que** l'agent ignifuge est suspendu dans un solvant et porté à une température de 10 à 200 °C avec les silazanes et/ou les mélanges de silazanes-organosiloxanes pendant 5 minutes à 24 heures sous agitation.

14. Procédé selon la revendication 13, **caractérisé en ce qu'**il est ensuite durci pendant 5 minutes à 24 heures à des températures de 10 à 200 °C.

15. Procédé selon une ou plusieurs des revendications 9 à 14, **caractérisé en ce que** le rapport en poids entre le silazane et l'organosiloxane est de 100:0 à 1:99.

16. Procédé selon une ou plusieurs des revendications 9 à 15, **caractérisé en ce que** le rapport en poids entre le silazane et l'organosiloxane est de 75:25 à 1:99.

17. Utilisation de l'agent ignifuge revêtu en poudre selon une ou plusieurs des revendications 1 à 8 dans des revêtements intumescents, des polyoléfines et d'autres polymères, ainsi que des textiles.
